# EUROPÄISCHE PATENTSCHRIFT

(11) **EP 3 693 782 B1**
(45) Veröffentlichungstag und Bekanntmachung des Hinweises auf die Patenterteilung: **01.05.2024**
(21) Anmeldenummer: 20165302.9
(22) Anmeldetag: 12.09.2016
(51) Int. Cl.: H02J 7/00, G02B 25/02, H02J 50/10

(54) **SEHHILFE-VORRICHTUNG**
VISION ASSISTANCE DEVICE
DISPOSITIF D'AIDE VISUELLE

(30) Priorität: 13.10.2015 DE 102015117403
(43) Veröffentlichungstag der Anmeldung: 12.08.2020
(62) Teilanmeldung aus: 16775082.7
(73) Patentinhaber: A. Schweizer GmbH Optische Fabrik, 91301 Forchheim (DE)
(72) Erfinder: SCHÜTTINGER, Alfred, 91301 Forchheim (DE)
(74) Vertreter: Hafner & Kohl PartmbB

(56) Entgegenhaltungen:
- WO-A1-2011/138089
- WO-A2-2014/076048
- CN-Y- 200 965 588

## Beschreibung

Die Erfindung betrifft eine optisch oder elektronisch vergrößernde Sehhilfe-Vorrichtung in Form einer Handlupe, Standlupe oder Umhängelupe.

Entsprechende Sehhilfe-Vorrichtungen sind z. B. in Form von optischen oder elektronischen Lupen an und für sich bekannt. Entsprechende Sehhilfe-Vorrichtungen können elektrische oder elektronische Funktionskomponenten umfassen, um deren Funktionalität, etwa durch integrierte Leuchtmittel, zu erweitern.

Die elektrische Versorgung entsprechender elektrischer oder elektronischer Funktionskomponenten erfolgt über einen wiederaufladbaren elektrischen Energiespeicher, z. B. in Form eines Akkumulators, welcher bisweilen geladen, d. h. mit elektrischer Energie versorgt, werden muss. Hierfür ist die Sehhilfe-Vorrichtung über ein Versorgungskabel mit einer externen elektrischen Energiequelle zu verbinden, was, insbesondere für in ihrem Sehvermögen eingeschränkte Benutzer, mitunter umständlich sein kann.

Hiervon ausgehend besteht ein Weiterentwicklungsbedarf entsprechender Sehhilfe-Vorrichtungen im Hinblick auf den Bedienkomfort bei einem Laden des wiederaufladbaren elektrischen Energiespeichers.

WO 2014/076048 A2 offenbart eine u.a. von Zahnärzten und Chirurgen zu tragende Brille.

CN 200 965 588 Y offenbart eine Lupe mit einer über einen Handgenerator realisierten autarken Energieversorgung.

Der Erfindung liegt die Aufgabe zugrunde, eine demgegenüber verbesserte Sehhilfe-Vorrichtung anzugeben.

Die Aufgabe wird durch eine Sehhilfe-Vorrichtung gemäß Anspruch 1 gelöst. Die hierzu abhängigen Ansprüche betreffen besondere Ausführungsformen der Sehhilfe-Vorrichtung.

Die Erfindung ist durch die beigefügten Ansprüche beschrieben.

Die hierin beschriebene Sehhilfe-Vorrichtung dient als optisch vergrößernde Sehhilfe. Die vermittels der Sehhilfe-Vorrichtung realisierbare Vergrößerung zu betrachtender Objekte, d. h. insbesondere Gegenstände, bild- und/oder textbasierter Informationsinhalte, etc., kann sonach (rein) optisch oder (rein) elektronisch erfolgen. Entsprechend kann die Sehhilfe-Vorrichtung z. B. als eine mobile oder stationäre optische oder elektronische Lupe, insbesondere optische oder elektronische Handlupe, optische oder elektronische Standlupe oder optische oder elektronische Umhängelupe, oder als ein optisches oder elektronisches Leseglas, etc. ausgebildet sein.

Die Sehhilfe-Vorrichtung kann also, z. B. in Form einer optischen Lupe, rein optisch vergrößernd ausgebildet sein, wobei sie wenigstens ein optisches Element, typischerweise ein Linsen- oder Lupenglas, umfasst, oder, z. B. in Form einer elektronischen Lupe, rein elektronisch vergrößernd ausgebildet sein, wobei sie neben einer soft- und/oder hardwaremäßig implementierten elektronischen Vergrößerungseinrichtung wenigstens ein Anzeige- bzw. Displayelement zur Darstellung elektronisch vergrößerter Objekte umfasst.

Die Sehhilfe-Vorrichtung umfasst wenigstens eine in wenigstens einem Betriebszustand elektrische Energie verbrauchende elektrische oder elektronische Funktionskomponente (elektrischer Verbraucher). Die Funktionskomponente verbraucht elektrische Energie (elektrischen Strom), um in Betrieb genommen bzw. in Betrieb gehalten zu werden. Unterschiedliche Betriebszustände der Funktionskomponente können sich in der jeweils verbrauchten elektrischen Energie unterscheiden.

Bei einer optisch vergrößernden Sehhilfe-Vorrichtung, d. h. z. B. bei einer optischen Lupe, kann es sich bei einer entsprechenden Funktionskomponente z. B. um ein Leuchtmittel, z. B. in Form einer Leuchtdiode (LED), handeln, welches in wenigstens einem Betriebszustand Licht bestimmter optischer Eigenschaften, d. h. insbesondere einer bestimmten Intensität und einer bestimmten Wellenlänge, emittiert. Ein entsprechendes Leuchtmittel verbessert die Sehhilfe-Vorrichtung insofern, als das über diese zu vergrößernde Objekt, insbesondere bei widrigen Lichtverhältnissen, vermittels des Leuchtmittels beleuchtet und insofern besser wahrgenommen werden kann.

Bei einer elektronisch vergrößernden Sehhilfe-Vorrichtung, d. h. z. B. bei einer elektronischen Lupe, kann es sich bei einer entsprechenden Funktionskomponente z. B. um ein Anzeige- bzw. Displayelement zur Darstellung elektronisch vergrößerter Objekte handeln.

Unabhängig von der konkreten Ausführungsform der wenigstens einen Funktionskomponente ist dieser wenigstens ein wiederaufladbarer elektrischer Energiespeicher zugeordnet. Die Funktionskomponente ist über den im Weiteren abgekürzt als "Energiespeicher" bezeichneten, wiederaufladbaren elektrischen Energiespeicher mit elektrischer Energie versorgbar bzw. versorgt. Bei dem Energiespeicher handelt es sich typischerweise um einen Akkumulator, kurz Akku, bzw. eine Batterie bzw. umfasst der Energiespeicher wenigstens einen solchen.

Wesentlich an der hierin beschriebenen Sehhilfe-Vorrichtung ist, dass Ladevorgänge des Energiespeichers drahtlos erfolgen können. Die Sehhilfe-Vorrichtung ist sonach im Rahmen entsprechender Ladevorgänge des Energiespeichers nicht mit einem Versorgungskabel zu verbinden, was ihre Handhabbarkeit erheblich verbessert. Wie eingangs erwähnt, kann die Verbindung einer Sehhilfe-Vorrichtung mit einem entsprechenden Versorgungskabel insbesondere für in ihrem Sehvermögen eingeschränkte Benutzer mitunter umständlich sein.

Drahtlose Ladevorgänge des Energiespeichers sind deshalb möglich, als der Energiespeicher induktiv geladen, d. h. induktiv mit elektrischer Energie versorgt, werden kann. Hierfür umfasst die Sehhilfe-Vorrichtung wenigstens ein dem Energiespeicher zugeordnetes induktives Element, typischerweise in Form einer induktiven Spule (Empfänger- oder Sekundärspule). Das induktive Element ist dazu eingerichtet, den Energiespeicher über induktive Wechselwirkung mit wenigstens einem weiteren induktiven Element, typischerweise in Form einer weiteren induktiven Spule (Sender- oder Primärspule), mit elektrischer Energie zu versorgen. Das weitere induktive Element ist nicht Bestandteil der Sehhilfe-Vorrichtung, sondern, wie im Weiteren erläutert, Bestandteil einer gesonderten Ladevorrichtung zum Laden des Energiespeichers der Sehhilfe-Vorrichtung. Ein vorrichtungsseitiges induktives Element kann als "erstes induktives Element", ein ladevorrichtungsseitiges weiteres induktives Element kann als "zweites induktives Element" bezeichnet werden.

Unter induktiver Wechselwirkung ist eine drahtlose induktive Energieübertragung zu verstehen. Hierbei wird in dem als Sender- oder Primärspule dienenden weiteren induktiven Element ein magnetisches Feld, insbesondere ein magnetisches Wechselfeld, erzeugt, wodurch in dem als Empfangs- oder Sekundärspule dienenden (vorrichtungsseitigen) induktiven Element eine elektrische Spannung, insbesondere eine elektrische Wechselspannung, induziert wird.

Zwischen dem induktiven Element und dem diesem zugeordneten Energiespeicher besteht eine elektrisch leitfähige Verbindung, sodass in dem (vorrichtungsseitigen) induktiven Element bei induktiver Wechselwirkung mit einem weiteren induktiven Element im Rahmen eines Ladevorgangs des Energiespeichers erzeugte elektrische Energie dem Energiespeicher zugeführt werden kann.

Induktive Ladevorgänge des Energiespeichers werden typischerweise über eine Steuereinrichtung gesteuert. Die Sehhilfe-Vorrichtung kann sonach eine, gegebenenfalls zwischen das wenigstens eine (vorrichtungsseitige) induktive Element und den wenigstens einen Energiespeicher geschaltete, Steuereinrichtung, welche zur Steuerung des Ladezustands und/oder des Ladebetriebs des Energiespeichers und zur Ermittlung wenigstens einer den Ladezustand und/oder den Ladebetrieb des Energiespeichers beschreibenden Ladezustands- und/oder Ladebetriebsinformation eingerichtet ist, umfassen. Eine entsprechende Steuereinrichtung kann software- und/oder hardwaremäßig implementiert sein.

Weiterhin kann die Sehhilfe-Vorrichtung eine der Steuereinrichtung zugeordnete Ausgabeeinrichtung, welche zur Ausgabe wenigstens einer von der Steuereinrichtung ermittelten Ladezustands- bzw. Ladebetriebsinformation an einen Benutzer und/oder an ein benutzerseitiges (mobiles) Endgerät, d. h. z. B. ein Handy, Smartphone, Laptop, Tablet, eine Smartwatch, etc., eingerichtet ist, umfassen. Eine entsprechende Ausgabeeinrichtung ist bei direkter Ausgabe entsprechender Ladezustands- und/oder Ladebetriebsinformationen an einen Benutzer insbesondere dazu eingerichtet, entsprechende Ladezustands- und/oder Ladebetriebsinformationen akustisch und/oder optisch und/oder haptisch auszugeben. Bestimmte Lade- bzw. Ladebetriebszustände können sonach durch bestimmte zuordenbare bzw. zugeordnete akustische und/oder optische und/oder haptische Signale ausgegeben werden. Hierfür kann die Ausgabeeinrichtung als eine Lautsprechereinrichtung zur Ausgabe akustischer Signale bestimmter Intensität (Lautstärke), Frequenz und Rhythmik und/oder eine im einfachsten Falle als Leuchtdiode ausgebildete Anzeigeeinrichtung zur Ausgabe optischer Signale bestimmter graphischer Darstellung, Frequenz und Rhythmik und/oder eine Vibrationseinrichtung zur Ausgabe haptischer Signale bestimmter Intensität, Frequenz und Rhythmik ausgebildet sein bzw. wenigstens eine solche umfassen. Bei Ausgabe entsprechender Ladezustands- und/oder Ladebetriebsinformationen an ein benutzerseitiges (mobiles) Endgerät ist die Ausgabeeinrichtung dazu eingerichtet, entsprechende Ladezustands- und/oder Ladebetriebsinformationen direkt oder indirekt, d. h. z. B. über ein Kommunikationsnetzwerk, an ein benutzerseitiges (mobiles) Endgerät zu senden.

Die geometrisch-konstruktive Anordnung bzw. Ausbildung des Energiespeichers bzw. des diesem zugeordneten induktiven Elements ist grundsätzlich in Abhängigkeit der jeweils konkreten geometrisch-konstruktiven Ausgestaltung der Sehhilfe-Vorrichtung zu wählen.

Eine erfindungsgemäße geometrisch-konstruktive Ausgestaltung der Sehhilfe-Vorrichtung sieht einen länglichen Grundkörper mit wenigstens einem Lagerungsabschnitt zur Lagerung wenigstens eines optischen Elements, insbesondere eines Linsen- oder Lupenglases, oder eines elektronischen Elements, insbesondere eines Anzeige- oder Displayelements zur Anzeige elektronisch vergrößerter Objekte, und wenigstens einem Handhabungsabschnitt zur Handhabung des Grundkörpers, vor.

Der Grundkörper kann ein- oder mehrteilig ausgebildet sein. Ein mehrteilig ausgebildeter Grundkörper umfasst mehrere miteinander verbindbare bzw. im Montagezustand der Sehhilfe-Vorrichtung miteinander verbundene Grundkörperelemente. Die Verbindung der Grundkörperelemente kann lösbar sein, sodass durch Lösen der Verbindung wenigstens zweiter Grundkörperelemente eine Zugriffsmöglichkeit in einen grundkörperseitig begrenzten Innenraum, in welchem verschiedene Bestandteile der Sehhilfe-Vorrichtung, wie z. B. der Energiespeicher, angeordnet oder ausgebildet sind, geschaffen werden kann. Der Lagerungsabschnitt und der Handhabungsabschnitt können als entsprechende Grundkörperelemente vorliegen; gleichermaßen kann jedoch auch der Lagerungsabschnitt bzw. der Handhabungsabschnitt mehrteilig ausgebildet sein, sodass ein Grundkörpersegment auch ein Lagerungsabschnittsegment bzw. ein Handhabungsabschnittsegment sein kann.

Unabhängig von der ein- oder mehrteiligen Ausbildung des Grundkörpers ist das induktive Element im Bereich des Handhabungsabschnitts an oder in dem Grundkörper angeordnet oder ausgebildet. Gleiches kann für den Energiespeicher und/oder die Steuereinrichtung und/oder die Ausgabeeinrichtung gelten.

Zweckmäßig ist das induktive Element unterhalb einer Längs(mittel)achse des Handhabungsabschnitts, insbesondere im Bereich der Innenseite einer Außenwandung des Handhabungsabschnitts, innerhalb des Grundkörpers angeordnet. Die Zweckmäßigkeit dieser Anordnung des induktiven Elements besteht darin, dass das induktive Element einerseits gegenüber äußeren, d. h. z. B. mechanischen und/oder klimatischen, Einflüssen gut geschützt angeordnet ist und andererseits im Rahmen eines Ladevorgangs des Energiespeichers möglichst nahe an ein weiteres induktives Element gebracht werden kann, was einen hohen Wirkungsgrad der induktiven Wechselwirkung und somit des Ladevorgangs gewährleistet.

Der Handhabungsabschnitt kann zumindest abschnittsweise eine ergonomische, d. h. z. B. bauchige, geometrische Gestalt aufweisen, was die Handhabbarkeit der Sehhilfe-Vorrichtung weiter verbessert. Der Querschnitt des Handhabungsabschnitts kann sonach zumindest abschnittsweise rund oder rundlich, d. h. ellipsoid bzw. oval, sein.

Wie erwähnt, kann es sich bei einer Funktionskomponente um ein Leuchtmittel, z. B. eine Leuchtdiode (LED), welches in wenigstens einem Betriebszustand Licht bestimmter optischer Eigenschaften, d. h. insbesondere einer bestimmten Intensität und einer bestimmten Wellenlänge, emittiert, handeln. Ein solches Leuchtmittel ist zweckmäßig im Bereich des Lagerungsabschnitts angeordnet, sodass von dem Leuchtmittel emittiertes Licht zumindest auf das durch das optische Element betrachtbare bzw. betrachtete Objekt trifft. Bei einer optischen Sehhilfe-Vorrichtung kann zwischen dem Leuchtmittel und dem Lagerungsabschnitt bzw. dem durch diesen gelagerten optischen Element, wie erwähnt z. B. ein Linsen- oder Lupenglas, ein Blendenabschnitt angeordnet oder ausgebildet sein, welcher dazu eingerichtet ist, zu verhindern, dass von dem Leuchtmittel emittiertes Licht unmittelbar auf das optische Element trifft.

Die Erfindung betrifft ferner eine Ladevorrichtung zum Laden eines Energiespeichers einer wie beschriebenen Sehhilfe-Vorrichtung. Die Ladevorrichtung umfasst wenigstens ein induktives Element, d. h. eine induktive Spule (Sender- oder Primärspule), welches dazu eingerichtet ist, mit einem einem zu ladenden Energiespeicher der Sehhilfe-Vorrichtung zugeordneten induktiven Element (Empfänger- oder Sekundärspule) induktiv zu wechselwirken, um den Energiespeicher über induktive Wechselwirkung drahtlos mit elektrischer Energie zu versorgen bzw. zu laden. Selbstverständlich können über eine entsprechende Ladevorrichtung prinzipiell auch Energiespeicher mehrerer Vorrichtungen induktiv geladen bzw. mit elektrischer Energie versorgt werden. Sämtliche Ausführungen im Zusammenhang mit der Sehhilfe-Vorrichtung gelten analog für die Ladevorrichtung und umgekehrt.

Die Ladevorrichtung kann einen Gehäusekörper, welcher wenigstens einen, insbesondere ebenen, Auflageabschnitt zur Auflage des Gehäusekörpers auf einem, insbesondere ebenen, Untergrund, d. h. z. B. auf einer Möbelplatte, insbesondere einer Tischplatte, aufweisen, welcher eine sichere Aufstellung der Ladevorrichtung auf einem Untergrund ermöglicht, und/oder wenigstens einen Aufnahmeabschnitt zur zumindest abschnittsweisen Aufnahme der Sehhilfe-Vorrichtung zumindest während eines Ladevorgangs des jener zugehörigen Energiespeichers aufweisen, welcher eine sichere und kompakte Lagerung der Sehhilfe-Vorrichtung an oder in dem Gehäusekörper ermöglicht.

Der Aufnahmeabschnitt kann entsprechend wenigstens eine der Außenkontur eines Grundkörpers, insbesondere eines Handhabungsabschnitts des Grundkörpers, der Sehhilfe-Vorrichtung gegengleich geformte Aufnahmekontur aufweisen. Die Aufnahmekontur kann z. B. durch eine, insbesondere muldenartige, Vertiefung an oder in dem Gehäusekörper ausgebildet sein, in welcher der vorrichtungsseitige Grundkörper aufnehmbar ist.

Die Ladevorrichtung kann eine Steuereinrichtung, welche zur Steuerung des Ladebetriebs des Energiespeichers und zur Ermittlung einer den Ladebetrieb des Energiespeichers beschreibenden Ladebetriebsinformation eingerichtet ist, umfassen.

Analog der vorrichtungsseitigen Steuereinrichtung kann auch der ladevorrichtungsseitigen Steuereinrichtung eine Ausgabeeinrichtung zugeordnet sein, welche zur Ausgabe wenigstens einer von der Steuereinrichtung ermittelten Ladebetriebsinformation an einen Benutzer und/oder an ein benutzerseitiges (mobiles) Endgerät eingerichtet ist. Es gelten die Ausführungen im Zusammenhang mit der vorrichtungsseitigen Ausgabeeinrichtung analog.

Die Erfindung betrifft weiter eine Ladeanordnung zum Laden eines Energiespeichers einer wie beschriebenen Sehhilfe-Vorrichtung vermittels einer wie beschriebenen Ladevorrichtung. Sämtliche Ausführungen im Zusammenhang mit der Sehhilfe-Vorrichtung und der Ladevorrichtung gelten analog für die Anordnung.

Schließlich betrifft die Erfindung ein Verfahren zum Laden eines Energiespeichers einer wie beschriebenen Sehhilfe-Vorrichtung, insbesondere vermittels einer wie beschriebenen Ladevorrichtung. Verfahrensgemäß wird der zu ladende Energiespeicher im Rahmen eines Ladevorgangs über induktive Wechselwirkung des wenigstens einen vorrichtungsseitigen induktiven Elements mit wenigstens einem ladevorrichtungsseitigen weiteren induktiven Element mit elektrischer Energie versorgt und somit geladen. Sämtliche Ausführungen im Zusammenhang mit der Sehhilfe-Vorrichtung, der Ladevorrichtung und der Anordnung gelten analog für das Verfahren.

Die Erfindung ist anhand von Ausführungsbeispielen in den folgenden Fig. näher erläutert. Dabei zeigt:
- Fig. 1: eine Prinzipdarstellung einer Sehhilfe-Vorrichtung gemäß einem Ausführungsbeispiel;
- Fig. 2, 3: jeweils eine Prinzipdarstellung einer Ladevorrichtung gemäß einem Ausführungsbeispiel;
- Fig. 4: eine Prinzipdarstellung einer Ladeanordnung gemäß einem Ausführungsbeispiel;
- Fig. 5: eine perspektivische Darstellung einer Sehhilfe-Vorrichtung gemäß einem weiteren Ausführungsbeispiel; und
- Fig. 6: einen Längsschnitt durch die in Fig. 5 gezeigte Sehhilfe-Vorrichtung.

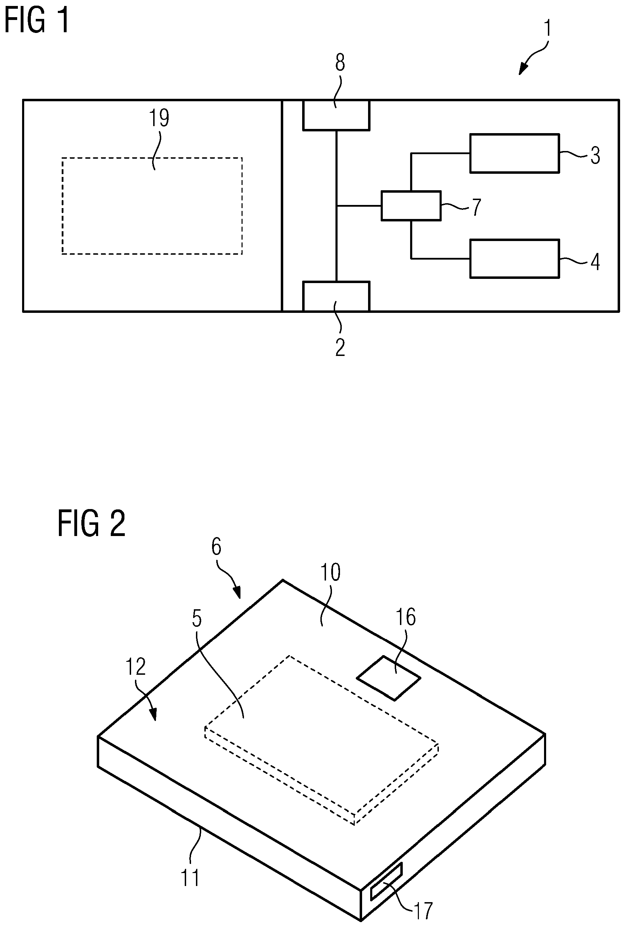

Fig. 1 zeigt eine Prinzipdarstellung einer Sehhilfe-Vorrichtung 1 gemäß einem Ausführungsbeispiel. Fig. 1 zeigt in Form einer optischen Lupe ein Ausführungsbeispiel einer entsprechenden Sehhilfe-Vorrichtung 1, welches als optisch vergrößernde Sehhilfe dient.

Grundsätzlich könnte ein Ausführungsbeispiel der Sehhilfe-Vorrichtung 1, z. B. in Form einer elektronischen Lupe, auch eine elektronisch vergrößernde Sehhilfe-Vorrichtung 1 sein, welche als elektronisch vergrößernde Sehhilfe dient. Die vermittels der Sehhilfe-Vorrichtung 1 realisierbare Vergrößerung zu betrachtender Objekte, d. h. insbesondere Gegenstände, bild- und/oder textbasierter Informationsinhalte, etc., kann sonach grundsätzlich (rein) optisch oder (rein) elektronisch erfolgen.

Die Sehhilfe-Vorrichtung 1 umfasst eine oder mehrere in wenigstens einem Betriebszustand elektrische Energie verbrauchende elektrische oder elektronische Funktionskomponente(n) 2 (elektrische Verbraucher). Eine entsprechende Funktionskomponente 2 verbraucht elektrische Energie (elektrischen Strom), um in Betrieb genommen bzw. in Betrieb gehalten zu werden. Unterschiedliche Betriebszustände der Funktionskomponente 2 können sich in der jeweils verbrauchten elektrischen Energie unterscheiden.

Bei dem in Fig. 1 gezeigten Ausführungsbeispiel handelt es sich bei der Funktionskomponente 2 um ein Leuchtmittel, z. B. in Form einer Leuchtdiode (LED), zur Emission von Licht, d. h. ein Leuchtmittel, welches in wenigstens einem Betriebszustand Licht bestimmter optischer Eigenschaften, d. h. insbesondere einer bestimmten Intensität und einer bestimmten Wellenlänge, emittiert. Bei einer elektronisch vergrößernden Sehhilfe-Vorrichtung 1 könnte es sich bei einer entsprechenden Funktionskomponente 2 z. B. um ein Anzeige- bzw. Displayelement zur Darstellung elektronisch vergrößerter Objekte handeln.

Unabhängig von der konkreten Ausführungsform der Funktionskomponente 2 ist dieser ein wiederaufladbarer elektrischer Energiespeicher 3 zugeordnet. Die Funktionskomponente 2 ist über den Energiespeicher 3 mit elektrischer Energie versorgbar bzw. versorgt. Bei dem Energiespeicher 3 handelt es sich um einen Akkumulator, kurz Akku, bzw. umfasst der Energiespeicher 3 wenigstens einen solchen.

Die Sehhilfe-Vorrichtung 1 ist derart konfiguriert, dass Ladevorgänge des Energiespeichers 3 drahtlos erfolgen können. Die Sehhilfe-Vorrichtung 1 ist sonach im Rahmen entsprechender Ladevorgänge des Energiespeichers 3 nicht mit einem Versorgungskabel zu verbinden, was ihre Handhabbarkeit erheblich verbessert.

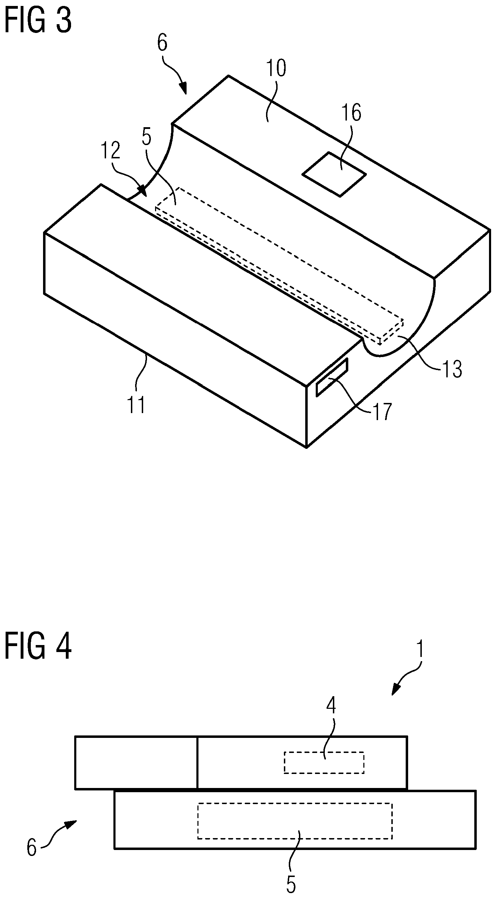

Drahtlose Ladevorgänge des Energiespeichers 3 sind deshalb möglich, als der Energiespeicher 3 induktiv geladen, d. h. induktiv mit elektrischer Energie versorgt, werden kann. Hierfür umfasst die Sehhilfe-Vorrichtung 1 ein dem Energiespeicher 3 zugeordnetes induktives Element 4 in Form einer induktiven Spule (Empfänger- oder Sekundärspule). Das induktive Element 4 ist dazu eingerichtet, den Energiespeicher 3 über induktive Wechselwirkung mit einem weiteren induktiven Element 5 in Form einer weiteren induktiven Spule (Sender- oder Primärspule) mit elektrischer Energie zu versorgen. Das weitere induktive Element 5 ist nicht Bestandteil der Sehhilfe-Vorrichtung 1, sondern Bestandteil einer in den Fig. 2, 3 jeweils in einer Prinzipdarstellung gezeigten, gesonderten Ladevorrichtung 6 zum Laden des Energiespeichers 3 der Sehhilfe-Vorrichtung 1. Zwischen dem induktiven Element 4 und dem Energiespeicher 3 besteht eine elektrisch leitfähige Verbindung, sodass in dem (vorrichtungsseitigen) induktiven Element 4 bei induktiver Wechselwirkung mit einem weiteren induktiven Element 5 im Rahmen eines Ladevorgangs des Energiespeichers 3 erzeugte elektrische Energie dem Energiespeicher 3 zugeführt werden kann.

Unter induktiver Wechselwirkung ist eine drahtlose induktive Energieübertragung zu verstehen. Hierbei wird in dem als Sender- oder Primärspule dienenden weiteren induktiven Element 5 ein magnetisches Feld, insbesondere ein magnetisches Wechselfeld, erzeugt, wodurch in dem als Empfangs- oder Sekundärspule dienenden vorrichtungsseitigen induktiven Element 4 eine elektrische Spannung, insbesondere eine elektrische Wechselspannung, induziert wird.

Induktive Ladevorgänge des Energiespeichers 3 werden über eine vorrichtungsseitige Steuereinrichtung 7 gesteuert. Die zwischen das induktive Element 4 und den Energiespeicher 3 geschaltete Steuereinrichtung 7 ist zur Steuerung des Ladezustands und/oder des Ladebetriebs des Energiespeichers 3 und zur Ermittlung wenigstens einer den Ladezustand und/oder den Ladebetrieb des Energiespeichers 3 beschreibenden Ladezustands- und/oder Ladebetriebsinformation eingerichtet. Die Steuereinrichtung 7 kann software- und/oder hardwaremäßig implementiert sein.

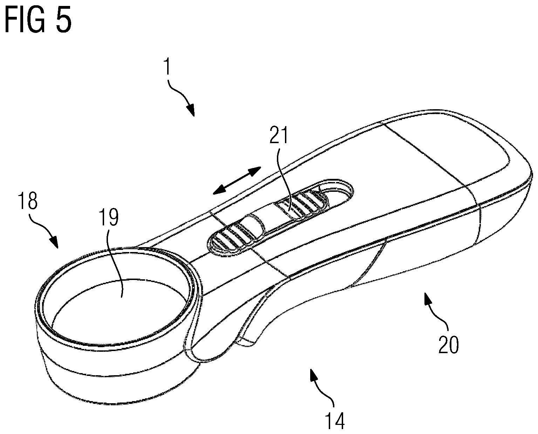

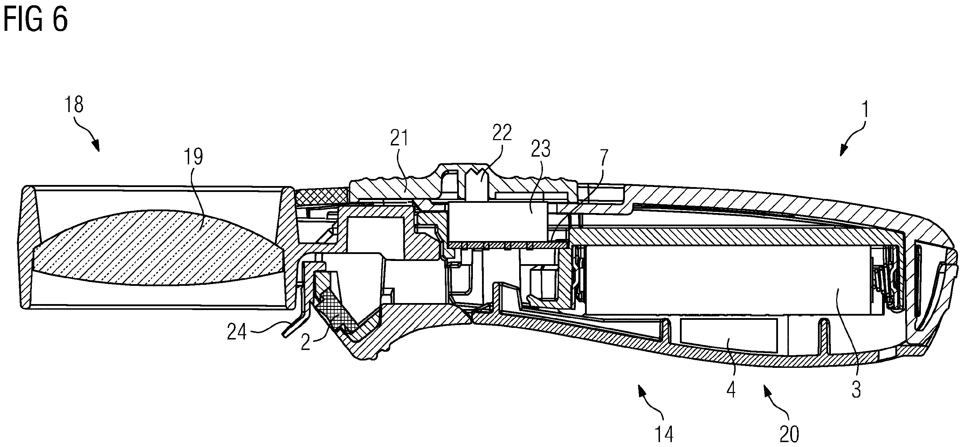

Der Steuereinrichtung 7 kann eine Ausgabeeinrichtung 8 zugeordnet sein, welche zur Ausgabe einer von der Steuereinrichtung 7 ermittelten Ladezustands- bzw. Ladebetriebsinformation an einen Benutzer und/oder an ein benutzerseitiges (mobiles) Endgerät, d. h. z. B. ein Handy, Smartphone, Laptop, Tablet, eine Smartwatch, etc., eingerichtet ist. Bei direkter Ausgabe entsprechender Ladezustands- und/oder Ladebetriebsinformationen an einen Benutzer ist die Ausgabeeinrichtung 8 insbesondere dazu eingerichtet, entsprechende Ladezustands- und/oder Ladebetriebsinformationen akustisch und/oder optisch und/oder haptisch auszugeben. Bestimmte Lade- bzw. Ladebetriebszustände können sonach durch bestimmte zuordenbare bzw. zugeordnete akustische und/oder optische und/oder haptische Signale ausgegeben werden. Hierfür kann die Ausgabeeinrichtung 8 als eine Lautsprechereinrichtung zur Ausgabe akustischer Signale bestimmter Intensität (Lautstärke), Frequenz und Rhythmik und/oder eine im einfachsten Falle als Leuchtdiode ausgebildete Anzeigeeinrichtung 9 (vgl. Fig. 5, 6) zur Ausgabe optischer Signale bestimmter graphischer Darstellung, Frequenz und Rhythmik und/oder eine Vibrationseinrichtung zur Ausgabe haptischer Signale bestimmter Intensität, Frequenz und Rhythmik ausgebildet sein bzw. wenigstens eine solche umfassen. Bei Ausgabe entsprechender Ladezustands- und/oder Ladebetriebsinformationen an ein benutzerseitiges (mobiles) Endgerät ist die Ausgabeeinrichtung 8 dazu eingerichtet, entsprechende Ladezustands- und/oder Ladebetriebsinformationen direkt oder indirekt, d. h. z. B. über ein Kommunikationsnetzwerk, an ein benutzerseitiges (mobiles) Endgerät zu senden.

Fig. 2 zeigt eine Prinzipdarstellung eine Ladevorrichtung 6 zum Laden eines Energiespeichers 3 einer wie in Fig. 1 gezeigten Sehhilfe-Vorrichtung 1. Die Ladevorrichtung 6 umfasst wenigstens ein induktives Element 5, d. h. eine induktive Spule (Sender- oder Primärspule), welches dazu eingerichtet ist, mit dem dem zu ladenden Energiespeicher 3 der Sehhilfe-Vorrichtung 1 zugeordneten induktiven Element 4 (Empfänger- oder Sekundärspule) induktiv zu wechselwirken, um den Energiespeicher 3 über induktive Wechselwirkung drahtlos mit elektrischer Energie zu versorgen bzw. zu laden.

Die Ladevorrichtung 6 umfasst einen Gehäusekörper 10. Der in Fig. 2 plattenartig bzw. - förmig ausgebildete Grundkörper 10 weist einen ebenen Auflageabschnitt 11 zur Auflage des Gehäusekörpers 10 auf einem, insbesondere ebenen, Untergrund, d. h. z. B. auf einer Möbelplatte, insbesondere einer Tischplatte, auf. Der Auflageabschnitt 11 ist durch die einem jeweiligen Untergrund zugewandte Unterseite des Gehäusekörpers 10 gebildet und ermöglicht eine sichere Aufstellung der Ladevorrichtung 6 auf einem Untergrund. Der Gehäusekörper 10 weist ferner einen Aufnahmeabschnitt 12 zur zumindest abschnittsweisen Aufnahme der Sehhilfe-Vorrichtung 1 zumindest während eines Ladevorgangs des jener zugehörigen Energiespeichers 3 auf. Der Aufnahmeabschnitt 12 ist bei dem in Fig. 2 gezeigten Ausführungsbeispiel durch die einem jeweiligen Untergrund abgewandte Oberseite des Gehäusekörpers 10 gebildet und somit ebenfalls eben.

Bei dem in Fig. 3 gezeigten Ausführungsbeispiel ist der Auflageabschnitt 11 - analog dem in Fig. 2 gezeigten Ausführungsbeispiel - ebenso durch die einem jeweiligen Untergrund zugewandte Unterseite des Gehäusekörpers 10 gebildet und ermöglicht eine sichere Aufstellung der Ladevorrichtung 6 auf einem Untergrund. Der Aufnahmeabschnitt 12 ist hingegen durch eine der Außenkontur eines Grundkörpers 14 der Sehhilfe-Vorrichtung 1, insbesondere eines im Zusammenhang mit den in den Fig. 5, 6 gezeigten Ausführungsbeispielen beschriebenen Handhabungsabschnitts 15 des Grundkörpers 14, der Sehhilfe-Vorrichtung 1 gegengleich geformte Aufnahmekontur 13 in Form einer, insbesondere muldenartigen, Vertiefung gebildet und ermöglicht eine besonders sichere und kompakte Lagerung der Sehhilfe-Vorrichtung 1 an bzw. in dem Gehäusekörper 10.

Die Ladevorrichtung 6 kann eine Steuereinrichtung (nicht gezeigt), welche zur Steuerung des Ladebetriebs des Energiespeichers 3 und zur Ermittlung einer den Ladebetrieb des Energiespeichers 3 beschreibenden Ladebetriebsinformation eingerichtet ist, umfassen. Analog der vorrichtungsseitigen Steuereinrichtung 7 kann auch der ladevorrichtungsseitigen Steuereinrichtung eine Ausgabeeinrichtung 16, z. B. in Form einer Anzeigeeinrichtung, zugeordnet sein, welche zur, z. B. zur optischen, Ausgabe wenigstens einer von der Steuereinrichtung ermittelten Ladebetriebsinformation an einen Benutzer und/oder an ein benutzerseitiges (mobiles) Endgerät eingerichtet ist.

Die Ladevorrichtung 6 ist mit einem elektrischen Anschlusselement 16, z. B. in Form einer Anschluss- bzw. Steckerbuchse, zum Anschluss eines elektrischen Versorgungskabels zur Verbindung der Ladevorrichtung 6 mit einer externen elektrischen Energiequelle (Stromquelle) ausgestattet. Das elektrische Anschlusselement 16 ist an einem gut zu erreichenden freiliegenden Abschnitt des Gehäusekörpers 10 angeordnet oder ausgebildet.

Fig. 4 zeigt eine Prinzipdarstellung einer Ladeanordnung zum Laden eines Energiespeichers 3 einer wie in Fig. 1 gezeigten Sehhilfe-Vorrichtung 1 vermittels einer wie in den Fig. 2, 3 gezeigten Ladevorrichtung 6. Die Sehhilfe-Vorrichtung 1 ist im Rahmen eines Ladevorgangs derart auf der Ladevorrichtung 6 angeordnet, d. h. auf diese auf- bzw. in diese eingelegt, dass eine induktive Wechselwirkung zwischen dem vorrichtungsseitigen induktiven Element 4 und dem ladevorrichtungsseitigen induktiven Element 5 möglich ist.

Mit der in Fig. 4 gezeigten Ladeanordnung lässt sich ein Verfahren zum Laden eines Energiespeichers 3 einer Sehhilfe-Vorrichtung 1. Verfahrensgemäß wird der zu ladende Energiespeicher 3 im Rahmen eines Ladevorgangs über induktive Wechselwirkung des vorrichtungsseitigen induktiven Elements 4 mit einem weiteren induktiven Element 5 mit elektrischer Energie versorgt und somit geladen.

Fig. 5 zeigt eine perspektivische Darstellung einer Sehhilfe-Vorrichtung 1 gemäß einem konkreten Ausführungsbeispiel, Fig. 6 zeigt einen Längsschnitt durch die in Fig. 5 gezeigte Sehhilfe-Vorrichtung 1. Grundsätzlich gelten die Ausführungen im Zusammenhang mit dem in Fig. 1 in einer Prinzipdarstellung gezeigten Sehhilfe-Vorrichtung 1 analog für das in den Fig. 5, 6 gezeigte Ausführungsbeispiel bzw. lassen sich die die Ausführungen im Zusammenhang mit dem in Fig. 1 in einer Prinzipdarstellung gezeigten Sehhilfe-Vorrichtung 1 auf das in den Fig. 5, 6 gezeigte Ausführungsbeispiel übertragen.

Anhand der Fig. 5, 6 ist ein länglicher Grundkörper 14 der Sehhilfe-Vorrichtung 1 ersichtlich. Der Grundkörper 14 ist zumindest funktionell in einen Lagerungsabschnitt 18 zur Lagerung eines optischen Elements 19, d. h. eines Linsen- oder Lupenglases, und einen Handhabungsabschnitt 20 zur Handhabung des Grundkörpers 14 aufgeteilt. Der Handhabungsabschnitt 20 weist eine ergonomische, d. h. z. B. bauchige, geometrische Gestalt auf, was die Handhabbarkeit der Sehhilfe-Vorrichtung 1 weiter verbessert.

Anhang von Fig. 6 ist ersichtlich, dass das induktive Element 4 im Bereich des Handhabungsabschnitts 20 in dem Grundkörper 14 angeordnet ist. Gleiches gilt für den Energiespeicher 3, die Steuereinrichtung 7 und die Funktionskomponente 2, bei welcher es sich um ein Leuchtmittel, d. h. eine Leuchtdiode (LED), welches in wenigstens einem Betriebszustand Licht bestimmter optischer Eigenschaften, d. h. insbesondere einer bestimmten Intensität und einer bestimmten Wellenlänge, emittiert, handelt.

Das Leuchtmittel ist benachbart zu dem Lagerungsabschnitt 18 im Bereich des Handhabungsabschnitts 20 angeordnet, sodass von diesem emittiertes Licht zumindest auf das durch das optische Element 19 betrachtbare bzw. betrachtete Objekt trifft.

Zwischen dem Leuchtmittel und dem Lagerungsabschnitt 18 bzw. dem durch diesen gelagerten optischen Element 19, ist ein Blendenabschnitt 24 angeordnet oder ausgebildet, welcher dazu eingerichtet ist, zu verhindern, dass von dem Leuchtmittel emittiertes Licht unmittelbar auf das optische Element 19 trifft.

Der Funktionskomponente 2 ist ein relativ zu dem Grundkörper 14 an diesem wie durch den Doppelpfeil in Fig. 5 angedeutet zwischen unterschiedlichen Positionen, welchen jeweils bestimmte Betriebszustände der Funktionskomponente 2 zugeordnet sind, bewegbar gelagertes Betätigungselement 21 in Form eines Schiebers zugehörig. Das Betätigungselement 21 ist mit einem ebenso beweglich gelagerten Wandlerelement 22 einer einen Teil der Steuereinrichtung 7 bildenden, jedenfalls mit dieser kommunizierenden Wandlereinrichtung 23 bewegungsgekoppelt, über welche entsprechende Positionierungen des Betätigungselements 21 in entsprechende zugeordnete Betriebszustände umgesetzt werden.

Konkret kann die Funktionskomponente 2 in Form des Leuchtmittels z. B. in einer ersten Position außer Betrieb genommen sein, sodass diese kein Licht emittiert, in einer zweiten Position in einen ersten Betriebszustand genommen sein, sodass diese Licht bestimmter optischer Eigenschaften, d. h. Licht einer ersten Intensität bzw. einer ersten Wellenlänge, emittiert, und in einer dritten Position in einen zweiten Betriebszustand genommen sein, sodass diese Licht bestimmter optischer Eigenschaften, d. h. Licht einer zweiten Intensität bzw. einer zweiten Wellenlänge, emittiert.

Anhand des in Fig. 6 gezeigten Längsschnitts ist ersichtlich, dass das induktive Element 4 unterhalb des Energiespeichers 3 und somit unterhalb der Längs(mittel)achse des Handhabungsabschnitts 20, insbesondere im Bereich der Innenseite einer Außenwandung des Handhabungsabschnitts 20, innerhalb des Grundkörpers 14 angeordnet ist. Diese Anordnung des induktiven Elements 4 ist zweckmäßig, als das induktive Element 4 einerseits gegenüber äußeren, d. h. z. B. mechanischen und/oder klimatischen, Einflüssen gut geschützt angeordnet ist und andererseits im Rahmen eines Ladevorgangs des Energiespeichers 3 möglichst nahe an ein keinen Bestandteil der Sehhilfe-Vorrichtung 1 bildendes weiteres induktives Element 5 gebracht werden kann, was einen hohen Wirkungsgrad der induktiven Wechselwirkung und somit des Ladevorgangs gewährleistet.

### BEZUGSZEICHENLISTE

- 1: Sehhilfe-Vorrichtung
- 2: Funktionskomponente
- 3: Energiespeicher
- 4: induktives Element
- 5: induktives Element
- 6: Ladevorrichtung
- 7: Steuereinrichtung
- 8: Ausgabeeinrichtung
- 9: Anzeigeeinrichtung
- 10: Gehäusekörper
- 11: Auflageabschnitt
- 12: Aufnahmeabschnitt
- 13: Außenkontur
- 14: Grundkörper
- 15: Handhabungsabschnitt
- 16: Ausgabeeinrichtung
- 17: elektrisches Anschlusselement
- 18: Lagerungsabschnitt
- 19: optisches Element
- 20: Handhabungsabschnitt
- 21: Betätigungselement
- 22: Wandlerelement
- 23: Wandlereinrichtung
- 24: Blendenabschnitt

## Patentansprüche

1. Optisch oder elektronisch vergrößernde Sehhilfe-Vorrichtung (1) in Form einer Handlupe, Standlupe oder Umhängelupe, umfassend:
- wenigstens eine in wenigstens einem Betriebszustand elektrische Energie verbrauchende elektrische oder elektronische Funktionskomponente (2),
- wenigstens einen der wenigstens einen elektrischen oder elektronischen Funktionskomponente (2) zugeordneten wiederaufladbaren elektrischen Energiespeicher (3); **gekennzeichnet durch**
- wenigstens ein dem wenigstens einen elektrischen Energiespeicher (3) zugeordnetes induktives Element (4), welches dazu eingerichtet ist, den wenigstens einen elektrischen Energiespeicher (3) über induktive Wechselwirkung mit wenigstens einem weiteren induktiven Element (5) mit elektrischer Energie zu versorgen,
einen länglichen Grundkörper (14) mit wenigstens einem Lagerungsabschnitt (18) zur Lagerung wenigstens eines optischen Elements (19), insbesondere eines Linsen- oder Lupenglases, und wenigstens einem Handhabungsabschnitt (20) zur Handhabung des Grundkörpers (14), wobei das wenigstens eine induktive Element (4) im Bereich des Handhabungsabschnitts (20) an oder in dem Grundkörper (14) angeordnet oder ausgebildet ist.

2. Sehhilfe-Vorrichtung nach Anspruch 1, **dadurch gekennzeichnet, dass** das wenigstens eine induktive Element (4) unterhalb einer Längsmittelachse des Handhabungsabschnitts (20), insbesondere im Bereich der Innenseite einer Außenwandung des Handhabungsabschnitts (20), innerhalb des Grundkörpers (14) angeordnet ist.

3. Sehhilfe-Vorrichtung nach einem der vorhergehenden Ansprüche, **dadurch gekennzeichnet, dass** der Handhabungsabschnitt (20) zumindest abschnittsweise eine ergonomisch, insbesondere bauchig, geformte geometrische Gestalt aufweist.

4. Sehhilfe-Vorrichtung nach einem der vorhergehenden Ansprüche, **gekennzeichnet durch** eine Steuereinrichtung (7), welche zur Steuerung des Ladezustands, insbesondere des Ladebetriebs, des wenigstens einen elektrischen Energiespeichers (3), und zur Ermittlung wenigstens einer den Ladezustand und/oder den Ladebetrieb des wenigstens einen elektrischen Energiespeichers (3) beschreibenden Ladezustands- und/oder Ladebetriebsinformation eingerichtet ist.

5. Sehhilfe-Vorrichtung nach einem der vorhergehenden Ansprüche, **dadurch gekennzeichnet, dass** die oder wenigstens eine elektrische oder elektronische Funktionskomponente (2) als ein Leuchtmittel, insbesondere als eine LED, ausgebildet ist oder wenigstens ein solches umfasst.

6. Sehhilfe-Vorrichtung nach Anspruch 5, **dadurch gekennzeichnet, dass** das Leuchtmittel im Bereich des Lagerungsabschnitts (18) angeordnet ist, sodass von dem Leuchtmittel emittiertes Licht zumindest auf den durch das optische Element betrachtbaren Bereich trifft, wobei optional zwischen dem optischen Element (19) und der als Leuchtmittel ausgebildeten Funktionskomponente (2) ein Blendenabschnitt (24) angeordnet oder ausgebildet ist, welcher dazu eingerichtet ist, zu verhindern, dass von dem Leuchtmittel emittiertes Licht unmittelbar auf das optische Element (19) trifft.

7. Ladevorrichtung (6) zum Laden eines wiederaufladbaren elektrischen Energiespeichers (3) einer Sehhilfe-Vorrichtung (1) nach einem der vorhergehenden Ansprüche, **gekennzeichnet durch**
wenigstens ein induktives Element (5), welches dazu eingerichtet ist, mit wenigstens einem einem zu ladenden elektrischen Energiespeicher (3) der Sehhilfe-Vorrichtung (1) zugeordneten induktiven Element (4) induktiv zu wechselwirken um den wenigstens einen elektrischen Energiespeicher (3) über induktive Wechselwirkung mit elektrischer Energie zu versorgen.

8. Ladevorrichtung nach Anspruch 7, **gekennzeichnet durch** einen Gehäusekörper (10), welcher wenigstens einen Aufnahmeabschnitt (13) zur zumindest abschnittsweisen Aufnahme der Sehhilfe-Vorrichtung (1) zumindest während eines Ladevorgangs des jener zugehörigen elektrischen Energiespeichers (3) aufweist und/oder wenigstens einen, insbesondere ebenen, Auflageabschnitt (11) zur Auflage des Gehäusekörpers (10) auf einem, insbesondere ebenen, Untergrund aufweist.

9. Ladevorrichtung nach Anspruch 8, **dadurch gekennzeichnet, dass** der Aufnahmeabschnitt (13) eine der Außenkontur eines Grundkörpers (14), insbesondere eines Handhabungsabschnitts (20) des Grundkörpers (14), der Sehhilfe-Vorrichtung (1) gegengleich geformte Aufnahmekontur (13) aufweist.

10. Ladevorrichtung nach einem der Ansprüche 7 bis 9, **gekennzeichnet durch** eine Steuereinrichtung, welche zur Steuerung des Ladebetriebs des wenigstens einen elektrischen Energiespeichers (3) und zur Ermittlung wenigstens einer den Ladebetrieb des wenigstens einen elektrischen Energiespeichers beschreibenden Ladebetriebsinformation eingerichtet ist.

11. Ladeanordnung zum Laden eines wiederaufladbaren elektrischen Energiespeichers (3) einer Sehhilfe-Vorrichtung (1) nach einem der Ansprüche 1 bis 6 vermittels einer Ladevorrichtung (6) nach einem der Ansprüche 7 bis 10.

12. Verfahren zum Laden eines wiederaufladbaren elektrischen Energiespeichers (3) einer Sehhilfe-Vorrichtung (1) nach einem der Ansprüche 1 bis 6, **dadurch gekennzeichnet, dass** der wenigstens eine elektrische Energiespeicher (3) im Rahmen eines Ladevorgangs über induktive Wechselwirkung des wenigstens einen vorrichtungsseitigen induktiven Elements (4) mit wenigstens einem weiteren induktiven Element (5) mit elektrischer Energie versorgt wird.

## Claims

1. Optical or electronically enlarged visual aid device (1) in the form of a handheld magnifier, stand-up magnifier or cloak magnifier, comprising:
at least one electrical or electronic functional component (2) which consumes electrical energy in at least one operating state,
at least one of the rechargeable electrical energy storage units (3) assigned to at least one electrical or electronic functional component (2); **characterised by**
at least one inductive element (4) assigned to at least one electric energy storage (3), which is set up to supply the at least one electrical energy storage (3) with at least one further inductive element (5) with electrical energy via inductive interaction, an elongated base body (14) having at least one storage portion (18) for storing at least one optical element (19), in particular a lens or magnifying glass, and at least one handling portion (20) for handling the base body (14), wherein the at least one inductive element (4) is arranged or formed in the area of the handling portion (20) on or in the base body (14).

2. Visual aid device according to claim 1, **characterised in that** the at least one inductive element (4) below a longitudinal median axis of the handling portion (20), in particular in the area of the inner side of an external wall of the handling portion (20), is arranged within the base body (14).

3. Visual aid device according to one of the preceding claims, **characterised in that** the handling portion (20) has at least partwise an ergonomic, in particular abdominal, shaped geometric shape.

4. Visual aid device according to one of the preceding claims, **characterised by** a control device (7), which is provided for the control of the charging state, in particular the charging mode, of at least one electric energy storage device (3), and for determining at least one the charging state and/or the charging mode of the at least one electrical energy storage (3) descriptive charging state and/or charging operation information.

5. Visual aid device according to one of the preceding claims, **characterised in that** the or at least an electrical or electronic functional component (2) is formed as a illuminant, in particular as an LED, or at least includes one such.

6. Visual aid device according to claim 5, **characterised in that** the illuminant is disposed in the region of the storage portion (18), so that light emitted from the illuminant hits at least the area which can be considered by the optical element, wherein optionally between the optical element (19) and the functional component (2) formed as a illuminant, an aperture portion (24) is arranged or formed, which is arranged to prevent that emitted light from the illuminant directly meets the optical element (19).

7. Charging device (6) for charging a rechargeable electrical energy storage device (3) of a visual aid device (1) according to any of the preceding claims, **characterised by** at least one inductive element (5), which is set up to interact with at least one electrical energy storage (3) assigned to the visual aid device (1) inductive element (4) inductively to supply the at least one electrical energy storage (3) via inductive interaction with electrical energy.

8. The charging device according to claim 7, **characterised by** a housing body (10), which has at least one receiving portion (13) for at least partwise reception of the visual aid device (1) at least during a charging process of the associated electrical energy storage (3) and/or at least one, in particular flat, support portion (11) for the support of the housing body (10) on a, in particular flat, substrate.

9. The loading device according to claim 8, **characterised in that** the receiving portion (13) one of the outer contour of a base body (14), in particular a handling portion (20) of the base body (14), the visual aid device (1) has oppositely shaped receiving contour (13).

10. Charging device according to one of claims 7 to 9, **characterised by** a control device, which is provided for the control of the charging operation of at least one electric energy storage (3) and for determining at least one the charging operation of the at least one electric energy storage device descriptive charging operation information.

11. Charging arrangement for charging a rechargeable electric energy storage device (3) of a visual aid device (1) according to any one of claims 1 to 6 mediated by a charging device (6) according to any of claims 7 to 10.

12. Method for charging a rechargeable electrical energy storage (3) of a visual aid device (1) according to one of claims 1 to 6, **characterised in that** the at least one electrical energy storage (3) in the context of a charging process via inductive interaction of at least one device side inductive element (4) is supplied with at least one further inductive element (5) with electrical energy.

## Revendications

1. Dispositif d'agrandissement optique ou électronique (1) sous la forme d'une loupe à main, d'une loupe ou d'une loupe à cape, comprenant:
- au moins un composant fonctionnel électrique ou électronique consommant de l'énergie électrique dans au moins un état de fonctionnement (2),
- au moins un des dispositifs de stockage d'énergie rechargeables associés à au moins un composant fonctionnel électrique ou électronique (2) (3); **caractérisé par**:
- au moins un élément inductif (4) associé à au moins un accumulateur d'énergie électrique (3), destiné à alimenter au moins un réservoir d'énergie électrique (3) par interaction inductive avec au moins un autre élément inductif (5);
un corps de base allongé (14) comportant au moins une section de stockage (18) destinée au stockage d'au moins un élément optique (19), en particulier un verre de lentille ou de loupe, et au moins une section de manipulation (20) pour manipuler le corps de base (14), dont au moins un élément inductif (4) est disposé ou formé dans la zone de la section de manipulation (20) ou dans le corps de base (14).

2. Dispositif d'aide visuelle selon la revendication 1, **caractérisé en ce qu'**au moins un élément inductif (4) est placé au -dessous d'un axe longitudinal médian de la section de manipulation (20), notamment dans la zone de l'intérieur d'une paroi extérieure de la section de manipulation (20), à l'intérieur du corps de base (14).

3. Dispositif d'aide visuelle selon l'une des revendications précédentes, **caractérisé en ce que** la section de manipulation (20) présente, au moins par section, une forme géométrique de forme ergonomique, notamment abdominale.

4. Dispositif d'aide visuelle selon l'une des revendications précédentes, **caractérisé par** un dispositif de commande (7), qui est mis en place pour contrôler l'état de charge, en particulier le mode de charge, d'au moins un accumulateur d'énergie électrique (3), et pour déterminer au moins un état de charge et/ou le mode de fonctionnement de la charge d'au moins un accumulateur d'énergie électrique (3).

5. Dispositif d'aide visuelle selon l'une des revendications précédentes, **caractérisé en ce que** la ou au moins un composant fonctionnel électrique ou électronique (2) est formé en tant qu'ampoule, notamment en tant que LED.

6. Dispositif d'aide visuelle selon la revendication 5, **caractérisé en ce que** l'ampoule est disposée dans le domaine de la section de stockage (18), de sorte que la lumière émise par l'ampoule rencontre au moins la zone visible par l'élément optique, dans laquelle, en option, entre l'élément optique (19) et le composant fonctionnel (2) formé comme ampoule, une section d'ouverture (24) est disposée ou formée pour empêcher que la lumière émise par l'ampoule ne touche directement l'élément optique (19).

7. Chargeur (6) pour le chargement d'un accumulateur d'énergie électrique rechargeable (3) d'un dispositif d'aide visuelle (1) selon l'une des revendications précédentes, **caractérisé par**:
au moins un élément inductif (5) destiné à interagir inductivement avec au moins un élément inductif (4) associé à un dispositif de stockage d'énergie électrique (3) à charger (3) pour alimenter en énergie électrique au moins un accumulateur d'énergie électrique (3) par interaction inductive.

8. Dispositif de chargement selon la revendication 7, **caractérisé par** un corps de boîtier (10) qui comporte au moins une section d'enregistrement (13) pour l'enregistrement au moins par section du dispositif d'aide visuelle (1) au moins pendant une opération de recharge du dispositif de stockage d'énergie électrique associé (3) et/ou comporte au moins une section d'appui (11), en particulier plane, pour poser le corps du boîtier (10) sur un support, en particulier plane.

9. Dispositif de chargement selon la revendication 8, **caractérisé en ce que** la section d'enregistrement (13) présente un contour d'enregistrement du contour extérieur d'un corps de base (14), notamment d'une section de manipulation (20) du corps de base (14), du dispositif d'aide visuelle (1), d'un contour d'enregistrement de la même forme (13).

10. Dispositif de chargement selon l'une des revendications 7 à 9, **caractérisé par** un dispositif de commande conçu pour contrôler le fonctionnement de la charge d'au moins un accumulateur d'énergie électrique (3) et pour déterminer au moins une information de fonctionnement de charge décrivant le mode de charge d'au moins un accumulateur d'énergie électrique.

11. Installation de charge pour charger un accumulateur d'énergie électrique rechargeable (3) d'un dispositif d'aide visuelle (1) selon l'une des revendications 1 à 6 au moyen d'un chargeur (6) selon l'une des revendications 7 à 10.

12. Procédé de chargement d'un accumulateur d'énergie électrique rechargeable (3) d'un dispositif d'aide visuelle (1) selon l'une des revendications 1 à 6, **caractérisé en ce qu'**au moins un dispositif de stockage d'énergie électrique (3) est alimenté par une interaction inductive d'au moins un élément inductif du dispositif (4) avec au moins un autre élément inductif (5).
